# FASCICULE DE BREVET EUROPEEN

(11) **EP 2 139 097 B1**
(45) Date de publication et mention de la délivrance du brevet: **17.10.2012**
(21) Numéro de dépôt: 09305577.0
(22) Date de dépôt: 19.06.2009
(51) Int. Cl.: H02K 11/00

(54) **Machine électrique tournante à plusieurs phases**
Drehende elektrische Maschine mit mehreren Phasen
Rotating electrical machine with several phases

(30) Priorité: 24.06.2008 FR 0854192
(43) Date de publication de la demande: 30.12.2009
(73) Titulaire: Renault s.a.s., 92100 Boulogne-Billancourt (FR)
(72) Inventeur: Birolleau, Damien, 78180 Montigny-le-Bretonneux (FR); Albert, Laurent, 78180 Montigny-le-Bretonneux (FR); Chillet, Christian, 38100 Grenoble (FR)

(56) Documents cités:
- WO-A-97/21262
- GB-A- 2 408 390
- US-A1- 2002 117 912

## Description

La présente invention concerne une machine électrique tournante à plusieurs phases, munie d'un rotor et d'un stator. Elle concerne plus particulièrement une machine électrique synchrone triphasée. La machine selon l'invention comprend un système de détection de courts-circuits dans un bobinage du stator et de défauts du rotor. L'invention est également relative à un véhicule automobile comprenant une telle machine, ainsi qu'à un procédé mettant en oeuvre la machine électrique selon l'invention.

Une machine électrique est un dispositif électromécanique permettant la conversion d'énergie électrique en travail ou énergie mécanique et réciproquement. La plupart des machines électriques fonctionnent grâce au magnétisme.

On connaît ainsi les machines tournantes, qui sont constituées d'un stator et d'un rotor. Les machines tournantes peuvent être utilisées comme générateur ou comme moteur électrique.

Dans un fonctionnement comme générateur, la machine permet de transformer un mouvement de rotation du rotor inducteur, entraîné par exemple par le moteur thermique du véhicule, en un courant électrique induit dans un bobinage du stator. Dans un fonctionnement en tant que moteur, la machine permet d'entraîner en rotation le rotor induit à l'aide du stator inducteur.

Parmi les machines tournantes, on connaît plus particulièrement les machines tournantes synchrones. Les courants du stator créent un champ magnétique tournant dans le stator. Sa fréquence de rotation est proportionnelle à la fréquence de l'alimentation électrique. La vitesse de ce champ tournant est appelée vitesse de synchronisme.

L'enroulement au rotor est alimenté par un courant continu, ce qui le rend semblable à un aimant. Il peut d'ailleurs être constitué d'aimants permanents, le rotor n'a alors plus besoin d'alimentation. Le champ magnétique du rotor créé cherche en permanence à s'aligner sur celui du stator. C'est le principe de la boussole. La machine est dite synchrone, car le champ du rotor ne peut tourner qu'à la même vitesse que le champ du stator.

Parmi les machines synchrones, on utilise plus particulièrement les machines synchrones triphasées. De telles machines sont notamment décrites dans le document US 5,006,745.

Un des problèmes qui peut apparaître pendant le fonctionnement des machines tournantes est la formation de courts-circuits dans les bobinages du stator, ainsi qu'un problème d'aimantation au rotor, tel qu'une désaimantation ou une cassure. Il est souhaitable de pouvoir détecter ces anomalies, de manière à pouvoir enclencher des procédures pour continuer à assurer un fonctionnement de la machine tournante en minimisant le danger, ou pour limiter les effets de l'anomalie.

On connaît du document JP 4299047 un procédé de détection d'anomalies au rotor, consistant à mesurer la tension aux bornes d'une ou plusieurs bobines d'une machine tournante. Ce procédé ne permet toutefois pas de détecter l'apparition de courts-circuits dans le stator.

Le document WO 2006/048470 décrit un procédé comprenant l'ajout d'un bobinage supplémentaire au stator. La force électromotrice générée dans ce bobinage par le rotor est mesurée et traitée pour détecter les asymétries du flux de champ magnétique du rotor. Ce procédé ne permet pas non plus de détecter l'apparition de courts-circuits dans le stator.

Le document US 6,236,227 divulgue une machine électrique tournante triphasée dans laquelle on mesure les tensions de chaque phase et on additionne les grandeurs mesurées pour détecter des anomalies au stator. Ce système ne permet toutefois pas de détecter des anomalies au rotor.

La demande WO 97/21262 décrit une unité de protection pour moteurs à courant alternatif, l'unité de protection comprenant des bobines de détection passant par les interstices du stator d'un moteur et un dispositif de protection connecté aux bobines de détection. Le changement de champ magnétique tournant dans le moteur est surveillé par le dispositif de protection ; le signal mesuré doit correspondre à un signal connu et proportionnel à la vitesse de rotation (signal non nul et variable en fonction de la vitesse et de l'alimentation de la machine). Toute différence avec le signal connu est alors interprété comme un défaut par le dispositif de protection si le champ magnétique tournant est anormal.

La demande US 2002/117912 décrit une machine électrique tournante tel qu'un générateur de courant alternatif, comprenant un bobinage multi-phase, un stator, un rotor, une bobine de détection ainsi qu'un circuit comparatif destiné à comparer un signal de sortie du circuit de détection avec une valeur seuil. Si un courant induit dans la bobine de détection dépasse la valeur seuil, une alarme est connectée.

La présente invention vise à remédier à ces inconvénients.

En particulier, l'invention propose une machine électrique tournante polyphasée munie d'un dispositif permettant de détecter à la fois la formation de courts-circuits dans les bobinages du stator, et la formation de courts-circuits dans tes bobinages du rotor ou un problème d'aimantation au rotor, suivant que le rotor est constitué d'aimants permanents ou de bobines.

L'invention a ainsi pour objet une machine électrique tournante à plusieurs phases, comprenant un rotor et un stator cylindriques, le stator étant muni d'encoches longitudinales délimitées par des dents, chaque phase comprenant au moins un ensemble de deux bobines disposées sur deux dents adjacentes, les deux bobines étant de polarités opposées et ayant une même amplitude de flux de champ magnétique.

La machine électrique selon l'invention comprend en outre :
- au moins un élément conducteur passant par au moins deux encoches de manière à entourer au moins un ensemble de deux bobines adjacentes de même phase, et
- des moyens de mesure de l'intensité du courant électrique parcourant le ou les éléments conducteurs et/ou de la tension aux bornes du ou des éléments conducteurs.

Par « les deux bobines sont de polarités opposées et ont une même amplitude de flux de champ magnétique » au sens de l'invention, on entend que les deux bobines sont aptes à être alimentées par un courant électrique, et que chaque bobine produit lors de son alimentation, et dans sa dent, un flux de champ magnétique d'amplitude sensiblement égale à l'amplitude du flux de champ magnétique produit par la bobine de la dent adjacente, le flux créant un pôle magnétique, vu par le rotor, de polarité opposée à celle du pôle créé par le flux de champ magnétique produit par la bobine de la dent adjacente.

Par « entourer » au sens de l'invention, en entend que l'élément conducteur traverse toute la longueur des encoches situées de part et d'autre du ou des ensembles de deux bobines adjacentes, et relie ces encoches. On peut envisager que l'élément conducteur forme une bobine autour de l'ensemble de deux bobines adjacentes de même phase.

Lors d'un fonctionnement normal de la machine tournante, le ou les éléments conducteurs voient une tension ou un courant nul ou quasi nul grâce à l'équilibre entre les variations de flux existant du fait de la conception de la machine. En cas d'apparition d'un court-circuit dans une phase du stator ou d'un défaut au rotor (défaut d'aimantation ou court-circuit dans un bobinage, selon la nature du rotor), l'équilibre est rompu, ce qui entraîne l'apparition d'un signal dans le ou les éléments de détection, et permet de caractériser une anomalie.

Le ou les ensembles de deux bobines adjacentes de même phase entourés par le ou les éléments conducteurs sont de préférence choisis de manière à ce que le ou les éléments conducteurs soient parcourus par un courant d'intensité nulle, ou sensiblement nulle, l'intensité pouvant être prédéterminée, en l'absence de défaut de fonctionnement dans la machine électrique, de manière à simplifier la détection de défauts de fonctionnement dans la machine électrique.

La machine peut notamment comporter trois phases. Le stator peut être constitué de douze dents ou d'un multiple de douze dents, aptes à recevoir douze bobines, réparties par exemple selon des ensembles successifs de deux bobines de même phase et de polarités opposées disposées sur deux dents adjacentes. La machine peut ainsi comprendre douze bobines ou un multiple de douze bobines.

La machine électrique à trois phases comprend de préférence trois éléments conducteurs, chaque élément conducteur entourant tous les ensembles de bobines adjacentes de même phase.

La machine électrique à trois phases peut comprendre un élément conducteur entourant un ensemble de six bobines adjacentes de trois phases différentes.

L'invention a également pour objet un véhicule automobile comprenant une machine électrique décrite ci-dessus.

L'invention a également pour objet un procédé de détection d'un défaut de fonctionnement dans un stator ou un rotor d'une machine électrique tournante à plusieurs phases décrite ci-dessus.

Le procédé selon l'invention comprend :
- une étape de mesure de l'intensité du courant électrique circulant dans le ou les éléments conducteurs et/ou de la tension aux bornes du ou des éléments conducteurs, et
- une étape de comparaison de la ou des valeurs mesurées avec une ou plusieurs valeurs de référence.

Comme expliqué plus haut, lors d'une apparition d'un court-circuit dans une phase du stator ou d'un défaut au rotor, un signal électrique apparaît dans le ou les éléments conducteurs, ce qui permet de détecter l'anomalie.

Dans le cas où la machine électrique comprend au moins un élément conducteur par phase, le procédé peut comprendre en outre une étape de comparaison des amplitudes des valeurs mesurées pour les différentes phases, de manière à identifier la phase défaillante.

Dans le cas où la machine électrique comprend au moins un élément conducteur par phase, le procédé peut comprendre en outre une étape de comparaison des signes des valeurs mesurées pour les différentes phases, de manière à identifier la phase défaillante.

Les avantages et caractéristiques de l'invention apparaîtront à la lecture de la description suivante, donnée uniquement à titre d'exemple non limitatif, et faite en référence aux dessins annexés sur lesquels :
- la figure 1 est une vue en coupe transversale d'un stator d'une machine tournante triphasée,
- la figure 2 est une vue déroutée de face d'un stator d'une machine tournante selon l'invention,
- la figure 3 est une vue en coupe transversale d'une partie d'une machine tournante selon l'invention,
- les figures 4 et 5 sont des vues en coupe transversale de la machine tournante,
- la figure 6 est une première vue partielle en coupe transversale de la machine tournante lors d'un court-circuit au stator,
- la figure 7 est un premier diagramme représentant l'intensité du courant dans les éléments conducteurs, en fonction du temps, lors d'un court-circuit au stator,
- la figure 8 est une deuxième vue partielle en coupe transversale de la machine tournante lors d'un court-circuit au stator, et
- la figure 9 est un deuxième diagramme représentant l'intensité du courant dans les éléments conducteurs, en fonction du temps, lors d'un court-circuit au stator.

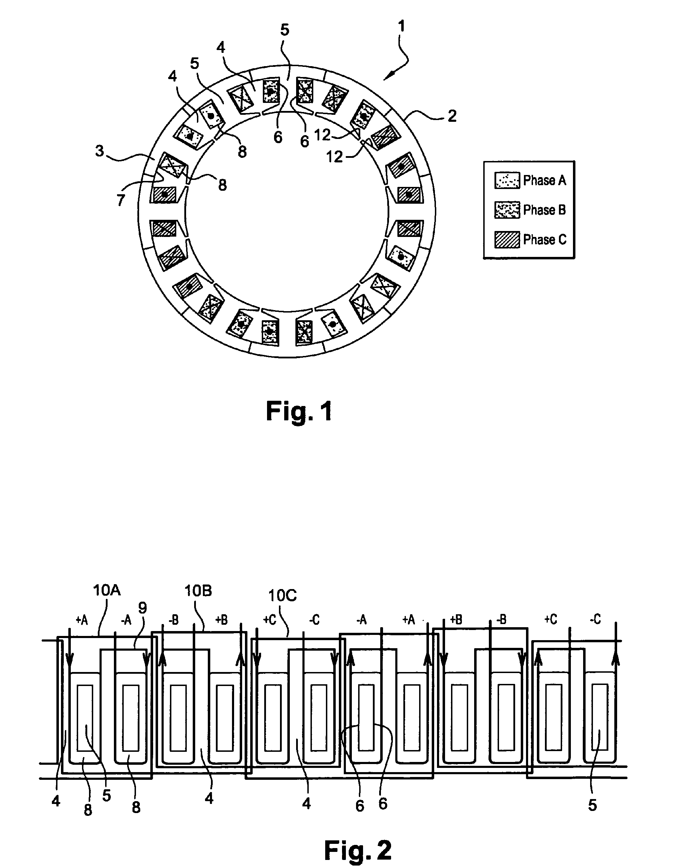

La machine 1, de type synchrone, telle qu'illustrée à la figure 1, comprend un stator 2 extérieur, de forme cylindrique, et un rotor disposé à l'intérieur du stator 2, et non représenté. Le stator 2 comprend une pluralité d'encoches 4 longitudinales, disposées dans le sens de la longueur du stator 2, et qui sont alignées pour former une pluralité de rainures axiales d'axe l'axe du stator 2. Les encoches 4 sont délimitées de manière alternée par douze dents 5, deux encoches 4 consécutives étant séparées par une dent 5. Les dents 5 sont à bords parallèles 6. Une bande de matière 3, appelée culasse, en tôle magnétique, existe entre le bord 7 des encoches 4 et la périphérie externe du stator 2, et relie ainsi les dents 5 entre elles. Les encoches 4 comprennent en outre, vers la périphérie interne du stator 2, et dans un plan de section transversale, deux portions inclinées 12 appelées becs d'encoche.

La machine 1 est triphasée et comprend ainsi un bobinage comportant trois phases, nommées A, B et C, chaque phase comprenant au moins un enroulement. Chaque enroulement de phase comprend des bobines 8. Les bobines 8 d'une même phase sont parcourues par le même courant. Tel qu'illustré à la figure 2, les bobines 8 sont réalisées à partir d'un fil 9 enroulé sur plusieurs tours pour former des spires. On peut monter sur les bords parallèles 6 des dents 5 des bobines 8 préformées ou bobiner directement sur les dents 5.

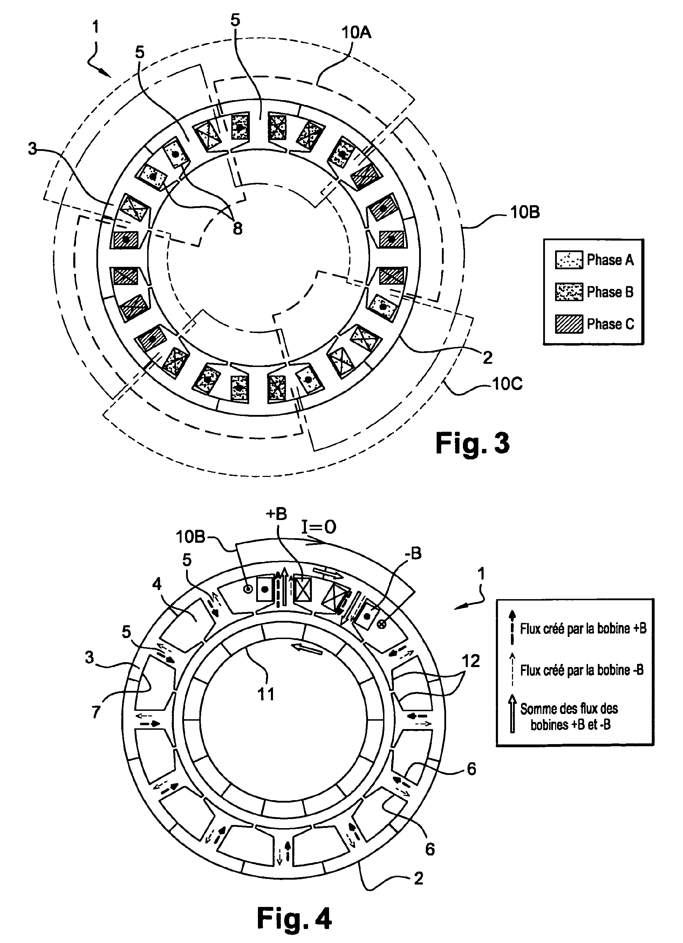

Le bobinage est réalisé sur la base de deux bobines 8 successives de même phase et de polarités opposées. Ainsi, tel qu'illustré sur les figures 2 et 3, les dents 5 accueillent successivement deux bobines 8 de phase A, deux bobines 8 de phase B, deux bobines 8 de phase C, puis à nouveau deux bobines 8 de phase A, deux bobines 8 de phase B et deux bobines 8 de phase C. Deux dents 5 adjacentes de même phase accueillent deux bobines 8 de même amplitude de flux et de polarités inverses, c'est-à-dire que chaque bobine 8 produit dans sa dent 5, un flux de champ magnétique d'amplitude sensiblement égale à l'amplitude du flux de champ magnétique produit par la bobine 8 de la dent 5 adjacente, le flux créant un pôle magnétique, vu par le rotor, de polarité opposée à celle du pôle créé par le flux de champ magnétique produit par la bobine 8 de la dent 5 adjacente. Par exemple, les deux bobines 8 adjacentes de phase A sont notées +A et -A.

Conformément à l'invention, des éléments de détection sous forme de trois éléments conducteurs isolés 10A, 10B, 10C sont disposés dans les encoches 4 de manière à entourer les ensembles de deux bobines 8 adjacentes de même phase, soit de phases A, B et C respectivement. Les trois éléments conducteurs 10A, 10B, 10C sont par exemple des fils métalliques entourés par une gaine isolante. Si l'on considère par exempte le fil 10A, il est disposé dans l'encoche 4 située à gauche du premier ensemble de bobines +A, -A, traverse la totalité de l'encoche 4 de bas en haut, puis épouse la partie horizontale supérieure des bobines +A, -A, et traverse l'encoche 4 située à droite du premier ensemble de bobines +A, -A pour passer ensuite sous les deux ensembles de bobines +B, -B et +C, -C, de phases respectives B et C. La disposition du fil 10A est ensuite reproduite de la même façon autours des deuxièmes ensembles de bobines de phase A, B et C. Les fils 10B et 10C sont disposés de la même manière vis-à-vis des phases B et C, respectivement.

Les éléments conducteurs 10A, 10B et 10C peuvent être placés à n'importe quelle profondeur dans les encoches 4. Ils sont disposés de préférence en fond d'encoche 4 pour limiter l'influence des flux de fuite dans les encoches 4.

Les extrémités des fils 10A, 10B et 10C sont reliées à un circuit électronique, non représenté, mesurant le courant circulant dans les fils 10A, 10B et 10C ou la tension aux bornes des fils 10A, 10B et 10C.

Les éléments conducteurs 10A, 10B, 10C sont ainsi aptes à mesurer les variations de flux de champ magnétique circulant entre eux par les dents 5 du stator 2. Ces variations de flux sont créées lors du fonctionnement de la machine 1 par l'alimentation des phases A,B,C en courant électrique ou par la rotation du rotor.

La figure 4, sur laquelle les éléments identiques à ceux des figures 1 à 3 portent les mêmes références, illustre une partie du fil de détection 10B d'une machine tournante 1 comprenant un stator 2 extérieur et un rotor 11 intérieur.

Les phases A, B et C sont bobinées sur des ensembles de deux dents 5 adjacentes, une dent 5 étant bobinée en sens inverse de l'autre dent 5. Ainsi, les flux produits par les bobines +B et -B créent deux pôles magnétiques de polarités opposées, vu du rotor 11. Par superposition des flux produits par chacune des bobines +B et -B, il ne reste que le flux circulant dans les deux dents 5 adjacentes, si on néglige le flux circulant dans les becs d'encoche 12. Le flux de champ magnétique produit par ces bobines et circulant d'une dent 5 à l'autre dent 5 est vu deux fois par l'élément conducteur 10B qui est placé de part et d'autre des deux dents 5. La somme de ces deux passages est donc nulle et le courant circulant dans l'élément conducteur 10B est nul. Cette dernière remarque reste vraie en prenant en compte le flux de champ magnétique circulant dans les becs d'encoche 12.

Le même raisonnement peut être effectué pour les groupes de dents 5 des autres phases A et C. Ainsi, quelle que soit l'alimentation électrique au stator 2, elle n'induit pas de tension et pas de courant dans les éléments conducteurs 10A, 10B, 10C.

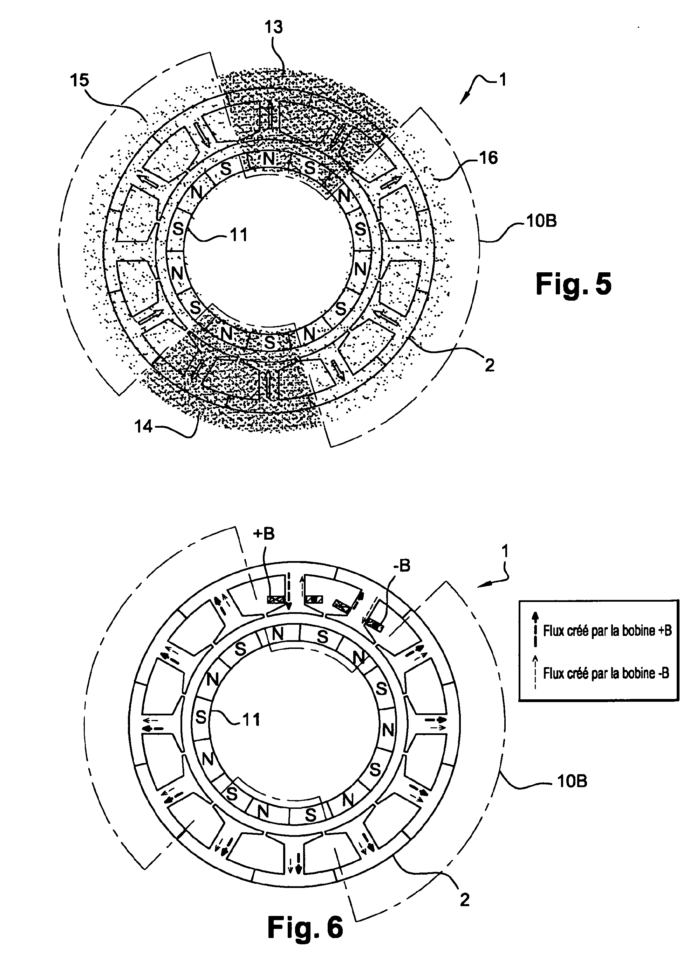

Le rotor 11, tel qu'illustré à la figure 5, comprend sept paires de pôle magnétique Nord/Sud. L'élément conducteur 10B entoure deux zones 13 et 14 de bobines 8 de phases B, les zones 13 et 14 étant diamétralement opposées. L'élément conducteur 10B délimite également deux zones 15 et 16 de bobines 8 de phases A et C, les zones 15 et 16 étant diamétralement opposées.

Les sources de flux au rotor 11 sont placées de telle manière que, vu du stator 2, deux sources diamétralement opposées sont de polarité différente. Une dent du stator 2 située d'un côté voit ainsi une variation de flux du rotor 11 opposée à la dent diamétralement opposée. Les fils de détection 10A, 10B, 10C sont placés de manière à sommer ces variations, ce qui annule leurs effets. En effet, les effets des flux créés par le rotor 11 sur les dents de la zone 13 sont exactement opposés à ceux créés sur les dents de la zone 14. Il en va de même pour la zone 15 par rapport à la zone 16.

Ainsi, pour un fonctionnement normal de la machine tournante 1, aux dissymétries de construction et aux erreurs de mesures près, la tension aux bornes de fils de détection 10A, 10B, 10C est nulle ou quasi-nulle, ainsi que le courant y circulant, et ce quelle que soit la vitesse de rotation du rotor 11.

Lors de l'apparition d'un court-circuit dans une ou plusieurs spires d'une bobine 8, les bobines 8 modifient la répartition du flux de champ magnétique dans la machine 1.

Du fait de la perte partielle ou totale de circulation du courant d'alimentation dans les spires en court-circuit, la capacité de la bobine 8 à produire du flux dans la phase en cause diminue. Cette perte crée un déséquilibre entre les dents 5 adjacentes de même phase. La bobine 8 en défaut n'a plus la capacité d'annuler tout le flux créé par la dent 5 adjacente dans le reste de la machine 1.

Un deuxième effet lié à l'apparition d'un court-circuit est que lorsqu'une variation de flux de champ magnétique est vue par des spires en court-circuit, un courant est induit dans ces spires. Ce courant crée un flux de champ magnétique qui s'oppose à celui qui cherche à s'établir. Les spires défectueuses sont une source de flux qui perturbe l'équilibre de la machine 1. Ces spires vont particulièrement perturber le flux dans la dent 5 défectueuse, accentuant le déséquilibre avec sa dent 5 adjacente de même phase.

La figure 6 illustre le cas où une bobine +B présente un court-circuit. Les flèches illustrent les deux sources de flux de champ magnétique qui déséquilibrent la répartition du flux. Il s'agit du flux dû au courant induit dans les spires en court-circuit de la bobine +B et du flux dû à la non annulation de la totalité du flux de la dent 5 adjacente portant la bobine -B dans le reste de la machine 1.

Le fil conducteur 10B, qui entoure les bobines de phase B, mesure ainsi le déséquilibre dans les flux circulant dans la machine 1, créé par ces deux sources. L'amplitude du signal (intensité ou tension) dans le fil 10B est proportionnelle à l'amplitude des variations de flux vues par le fil 10B.

Le fil 10B, qui entoure la bobine +B défectueuse voit une amplitude de variation de flux supérieure à celle vue par les fils 10A et 10C. Il est ainsi possible d'identifier la phase défectueuse en comparant les amplitudes de l'intensité ou de la tension des fils 10A, 10B et 10C.

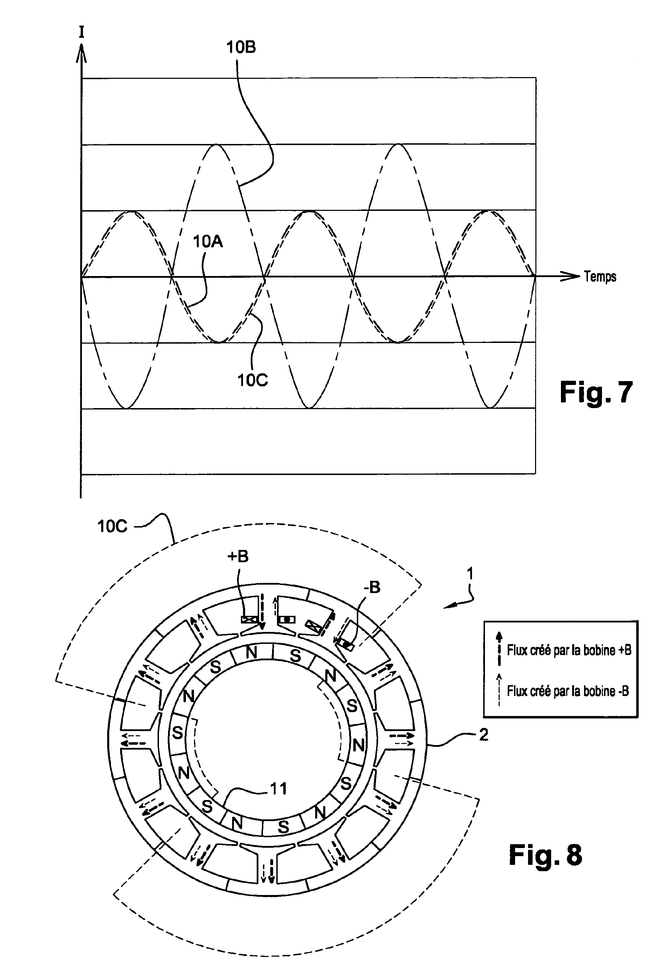

La figure 7 illustre l'intensité ou la tension mesurée, en fonction du temps, pour chacun des trois fils conducteurs 10A, 10B, 10C. Le fil 10B, qui est le fil principal du défaut détecté en phase B, présente une amplitude nettement supérieure (environ deux fois supérieure) à celle des deux autres fils 10A et 10C. Les amplitudes du courant circulant dans les fils 10A et 10C sont, si on néglige les fuites de flux par les becs d'encoche 12, sensiblement égales et représentent environ la moitié de l'amplitude du courant circulant dans le fil principal 10B. La somme des amplitudes des courant circulant dans les fils 10A, 10B et 10C est nulle ou sensiblement nulle à chaque instant.

Il est également possible d'identifier la phase en faute en comparant les signes des signaux obtenus par les trois fils 10A, 10B et 10C. Par convention choisie, le signal du fil principal 10B est en effet de signe opposé à celui du signal des deux autres fils 10A et 10C. De plus, l'amplitude mesurée étant proportionnelle à l'amplitude des variations de flux créées par le déséquilibre, il est ainsi possible de déterminer approximativement la gravité du défaut, par exemple le nombre approximatif de spires défectueuses.

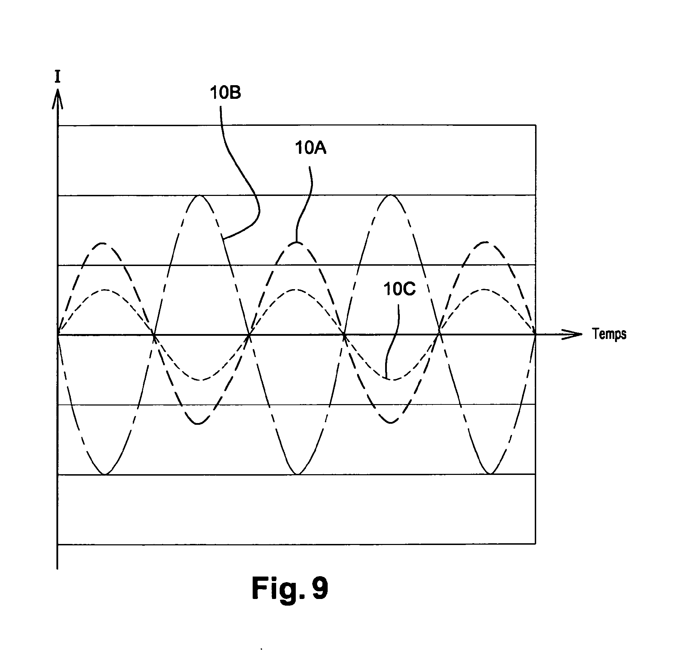

Si on ne néglige pas les fuites de flux par les becs d'encoche 12, le fil 10C, illustré à la figure 8, qui entoure les bobines 8 de phase C adjacentes au groupe de bobines de phase B défectueux présente une intensité d'amplitude inférieure à celle du fil 10A, le fil 10A étant plus proche de la dent +B défectueuse, ainsi qu'illustré à la figure 9.

On peut également détecter un court-circuit entre deux bobines de deux dents adjacentes d'une même phase. Un court-circuit entre les bobinages de ces deux dents entraîne un déséquilibre dans les flux de la machine 1 et est donc détectable, en identifiant la phase en faute. Il en va de même pour deux dents adjacentes de phases différentes.

La détection précédemment décrite implique des variations de flux pour détecter les défauts. Il est donc nécessaire que les phases soient alimentées et/ou que le rotor tourne. Pour faire un diagnostic à l'arrêt, au démarrage du véhicule par exemple, deux solutions sont possibles. On peut envoyer du courant dans les phases A,B,C de la machine 1, les unes après les autres, ou simultanément, puis mesurer la réponse des fils conducteurs 10A,10B,10C. On peut également envoyer un courant dans un des fils conducteurs 10A,10B,10C pour exciter les éventuelles spires défaillantes et mesurer sur les deux autres fils la réponse. On peut le faire sur les trois fils 10A, 10B, 10C les uns après les autres, ou alimenter deux fils en même temps et mesurer sur le dernier pour plus de précision.

Dans le cas du rotor 11, la détection d'un défaut sur un rotor 11 à aimants permanents nécessite sa rotation. Pour un rotor bobiné, un mode actif est envisageable. Il est possible d'envoyer un courant variable dans les bobinages du rotor pour faire réagir la spire en court-circuit et observer la réaction des fils conducteurs face au déséquilibre des flux que le défaut entraîne.

Grâce aux fils conducteurs 10A,10B,10C, il est également possible de détecter un défaut au rotor 11, par exemple si un aimant présente un défaut, tel qu'une désaimantation ou une cassure. En cas d'anomalie, un déséquilibre va apparaître entre le flux produit par la partie endommagée et sa partie diamétralement opposée. Ce déséquilibre est visible et détectable par les fils 10A,10B,10C, car l'équilibre de flux entre les parties diamétralement opposées est rompu. En effet, ce défaut a une influence particulière sur les fils conducteurs 10A,10B,10C, car lors de la rotation du rotor 11, celui-ci fait défiler la zone défaillante devant les fils 10A,10B,10C. Les variations sur les signaux sont donc identiques à un décalage temporel près. Ainsi, un signal de même amplitude pour tous les fils 10A,10B,10C et déphasé temporellement entre les fils 10A,10B,10C caractérise la présence d'un défaut au rotor 11 du type à aimants permanents. De la même façon que pour un défaut au stator 2, l'amplitude des variations détectées permet de juger la gravité du défaut.

Dans le cas où le rotor 11 est un rotor bobiné sur dents, un court-circuit peut apparaître dans un de ses bobinages. De la même façon que pour un court-circuit au stator 2, les spires en court-circuit vont lutter contre les variations de flux qui les traversent. La perte de spires saines provoque également une baisse de la capacité de la bobine défaillante à produire du flux. La perturbation du flux du rotor varie au cours du temps en fonction des variations de flux vues par les spires en court-circuit. Cette défaillance est cependant identifiable, car comme dans le cas des aimants, la défaillance défile aussi devant les fils conducteurs 10A,10B,10C lors de la rotation du rotor.

Un autre élément important est le diagnostic de l'efficacité du système de détection. Un tel diagnostic est possible avec les trois fils 10A,1 OB,10C de l'invention.

Par exemple, en cas d'un réel défaut sur la machine 1, les trois fils 10A, 10B,10C doivent émettre un signal. Si un fil annonce un défaut tandis que les autres ne détectent rien (pas de signal émis), alors ce fil doit être considéré comme défaillant et son signal est ignoré. De même, si deux fils annoncent un défaut et si le dernier n'émet aucun signal, alors ce fil doit être considéré comme défaillant et son signal est ignoré.

Le système est donc tolérant aux fautes, car même si un fil 10A,10B,1 OC est considéré comme défaillant, les deux autres sont suffisants pour détecter un défaut et même identifier la phase en faute à l'aide du signe des signaux et de leurs amplitudes. Deux signaux de même signe indiquent que la phase défaillante est celle dont le fil principal 10A,10B,10C est défaillant. Deux signaux de signes différents indiquent que la phase en faute est celle qui correspond à l'amplitude maximale dans son fil principal 10A,10B,10C.

On peut aussi utiliser un système de détection avec un fil en moins. Le système de détection est alors de type « fait silent ». Si un fil annonce un défaut alors que l'autre n'émet rien, alors on ne fait plus confiance aux signaux des deux fils. On peut alors, par précaution, annoncer un défaut. En fonctionnement normal, deux fils suffisent à identifier la faute.

On peut également envisager un système de détection du bon fonctionnement des fils 10A,10B,10C en envoyant une tension aux bornes des fils 10A,10B,10C et en vérifiant le courant obtenu.

Bien que le système décrit ci-dessus comporte trois fils de détection 10A,10B,10C, on peut envisager un seul élément conducteur entourant un ou plusieurs ensembles de deux bobines adjacentes 8 de même phase. Dans ce cas, on détecte alors la présence d'une défaillance, sans pouvoir identifier la phase défaillante. On peut également envisager d'utiliser deux éléments conducteurs entourant chacun un ou plusieurs ensembles de deux bobines adjacentes de même phase.

On peut ainsi par exemple envisager un élément conducteur entourant les ensembles suivants :
- un ensemble constitué de un, deux ou trois groupes de deux bobines adjacentes de phase A,
- un ensemble constitué de un, deux ou trois groupes de deux bobines adjacentes de phase B,
- un ensemble constitué de un, deux ou trois groupes de deux bobines adjacentes de phase C,
- un ensemble constitué de deux bobines adjacentes de phase A et de deux bobines adjacentes de phase B,
- un ensemble constitué de deux bobines adjacentes de phase A et de deux bobines adjacentes de phase C
- un ensemble constitué de deux bobines adjacentes de phase B et de deux bobines adjacentes de phase C.

Le ou les éléments conducteurs entourent de préférence des ensembles de deux bobines adjacentes diamétralement opposés, de façon à ce que le rotor n'induise pas de tension ou de courants dans le ou les éléments conducteurs.

Dans le système triphasé, on utilise de préférence trois éléments conducteurs entourant les ensembles de bobines adjacentes de phase A, B, et C, respectivement, ou au moins un élément conducteur entourant un ensemble de six bobines adjacentes de trois phases différentes, c'est-à-dire deux bobines A, deux bobines B et deux bobines C.

Les douze dents triphasées peuvent par exemple se succéder selon les ordres suivants :
- deux dents A, deux dents B, deux dents C, deux dents A, deux dents B, deux dents C
- deux dents A, deux dents C, deux dents B, deux dents A, deux dents C, deux dents B
- quatre dents A, quatre dents B, quatre dents C.

Plus généralement pour un système à N phases, on peut utiliser un seul élément conducteur entourant un ou plusieurs ensembles (de préférence N ensembles ou au moins N-1 ensembles, de manière à pouvoir diagnostiquer l'efficacité du système de détection) de deux bobines adjacentes de même phase, de préférence entourant tous les ensembles de deux bobines adjacentes de même phase. On peut également utiliser un élément conducteur par groupe de deux bobines adjacentes de même phase, ou un élément conducteur pour un groupe sur deux de deux bobines adjacentes de même phase.

Si, en fonctionnement normal de la machine, le courant circulant dans le ou les éléments conducteurs n'est pas nul, on pourra procéder à un calibrage des moyens de détection du signal, de façon à détecter plus facilement les défaillances.

## Revendications

1. Machine électrique tournante (1) à plusieurs phases (A,B,C), comprenant un rotor (11) et un stator (2) cylindriques, le stator (2) étant muni d'encoches (4) longitudinales délimitées par des dents (5), chaque phase (A,B,C) comprenant au moins un ensemble de deux bobines (8) disposées sur deux dents (5) adjacentes, les deux bobines (8) étant de polarités opposées et ayant une même amplitude de flux de champ magnétique, **caractérisée en ce que** la machine électrique (1) comprend en outre :
- au moins un élément conducteur (10A,10B,10C) passant par au moins deux encoches (4) de manière à entourer au moins un ensemble de deux bobines (8) adjacentes de même phase (A,B,C), et
- des moyens de mesure de l'intensité du courant électrique circulant dans le ou les éléments conducteurs (10A,10B,10C) et/ou de la tension aux bornes du ou des éléments conducteurs (10A,10B,10C).

2. Machine électrique selon la revendication 1, **caractérisée en ce que** le ou les ensembles de deux bobines (8) adjacentes de même phase (A,B,C) entourés par le ou les éléments conducteurs (10A,10B,10C) sont choisis de manière à ce que le ou les éléments conducteurs (10A,10B,10C) soient parcourus par un courant d'intensité nulle ou sensiblement nulle en l'absence de défaut de fonctionnement dans la machine électrique (1).

3. Machine électrique (1) selon la revendication 1 ou 2, **caractérisée en ce qu'**elle comporte trois phases (A,B,C).

4. Machine électrique (1) selon la revendication 3, **caractérisée en ce qu'**elle comprend douze bobines (8) ou un multiple de douze bobines (8).

5. Machine électrique (1) selon la revendication 3 ou 4, **caractérisée en ce qu'**elle comprend trois éléments conducteurs (10A,10B,10C), chaque élément conducteur (10A,10B,10C) entourant tous les ensembles de bobines (8) adjacentes de même phase (A,B,C).

6. Machine électrique (1) selon la revendication 4, **caractérisée en ce qu'**elle comprend un élément conducteur entourant un ensemble de six bobines (8) adjacentes de trois phases (A,B,C) différentes.

7. Véhicule automobile, **caractérisé en ce qu'**il comprend une machine électrique (1) selon l'une des revendications 1 à 6.

8. Procédé de détection d'un défaut de fonctionnement dans un stator (2) ou un rotor (11) d'une machine électrique tournante (1) à plusieurs phases (A,B,C) selon la revendication 1, **caractérisé en ce qu'**il comprend :
- une étape de mesure de l'intensité du courant électrique circulant dans le ou les éléments conducteurs (10A,10B,10C) et/ou de la tension aux bornes du ou des éléments conducteurs (10A, 10B, 10C), et
- une étape de comparaison de la ou des valeurs mesurées avec une ou plusieurs valeurs de référence.

9. Procédé selon la revendication 8, **caractérisé en ce que** la machine électrique (1) comprend au moins un élément conducteur (10A,10B,10C) par phase (A,B,C) et **en ce que** le procédé comprend en outre une étape de comparaison des amplitudes des valeurs mesurées pour les différentes phases (A,B,C).

10. Procédé selon la revendication 8 ou 9, **caractérisé en ce que** la machine électrique (1) comprend au moins un élément conducteur (10A,10B,10C) par phase, et **en ce que** le procédé comprend en outre une étape de comparaison des signes des valeurs mesurées pour les différentes phases (A,B,C).

## Claims

1. Rotating electrical machine (1) with several phases (A, B, C), comprising a rotor (11) and a stator (2) which are cylindrical, the stator (2) being provided with longitudinal notches (4) delimited by teeth (5), each phase (A, B, C) comprising at least one set of two windings (8) arranged on two adjacent teeth (5), the two windings (8) having opposite polarities and having one and the same magnetic field flux amplitude, **characterized in that** the electrical machine (1) also comprises:
- at least one conductive element (10A, 10B, 10C) passing through at least two notches (4) so as to surround at least one set of two adjacent windings (8) of the same phase (A, B, C), and
- means for measuring the intensity of the electrical current flowing in the conductive element or elements (10A, 10B, 10C) and/or the voltage at the terminals of the conductive element or elements (10A, 10B, 10C).

2. Electrical machine according to Claim 1, **characterized in that** the set or sets of two adjacent windings (8) of the same phase (A, B, C) surrounded by the conductive element or elements (10A, 10B, 10C) are chosen such that the conductive element or elements (10A, 10B, 10C) is/are passed through by a current of zero or substantially zero intensity in the absence of any operating defect in the electrical machine (1).

3. Electrical machine (1) according to Claim 1 or 2, **characterized in that** it comprises three phases (A, B, C).

4. Electrical machine (1) according to Claim 3, **characterized in that** it comprises twelve windings (8) or a multiple of twelve windings (8).

5. Electrical machine (1) according to Claim 3 or 4, **characterized in that** it comprises three conductive elements (10A, 10B, 10C), each conductive element (10A, 10B, 10C) surrounding all the sets of adjacent windings (8) of the same phase (A, B, C).

6. Electrical machine (1) according to Claim 4, **characterized in that** it comprises one conductive element surrounding a set of six adjacent windings (8) of three different phases (A, B, C).

7. Motor vehicle, **characterized in that** it comprises an electrical machine (1) according to one of Claims 1 to 6.

8. Method for detecting an operating defect in a stator (2) or a rotor (11) of a rotating electrical machine (1) with several phases (A, B, C) according to Claim 1, **characterized in that** it comprises:
- a step for measuring the intensity of the electrical current flowing in the conductive element or elements (10A, 10B, 10C) and/or the voltage at the terminals of the conductive element or elements (10A, 10B, 10C), and
- a step for comparing the measured value or values with one or more reference values.

9. Method according to Claim 8, **characterized in that** the electrical machine (1) comprises at least one conductive element (10A, 10B, 10C) for each phase (A, B, C) and **in that** the method also comprises a step for comparing the amplitudes of the values measured for the different phases (A, B, C).

10. Method according to Claim 8 or 9, **characterized in that** the electrical machine (1) comprises at least one conductive element (10A, 10B, 10C) for each phase, and **in that** the method also comprises a step for comparing the signs of the values measured for the different phases (A, B, C).

## Patentansprüche

1. Drehende elektrische Maschine (1) mit mehreren Phasen (A,B,C), die einen zylindrischen Rotor (11) und einen zylindrischen Stator (2) enthält, wobei der Stator (2) mit von Zähnen (5) begrenzten Längskerben (4) versehen ist, wobei jede Phase (A,B,C) mindestens eine Einheit von zwei Spulen (8) enthält, die auf zwei benachbarten Zähnen (5) angeordnet sind, wobei die zwei Spulen (8) entgegengesetzte Polaritäten und die gleiche Magnetfeldflussamplitude haben, **dadurch gekennzeichnet, dass** die elektrische Maschine (1) außerdem enthält:
- mindestens ein leitendes Element (10A, 10B, 10C), das durch mindestens zwei Kerben (4) verläuft, um mindestens eine Einheit von zwei benachbarten Spulen (8) gleicher Phase (A,B,C) zu umgeben, und
- Einrichtungen zur Messung der Stärke des in dem oder den leitenden Elementen (10A, 10B, 10C) fließenden elektrischen Stroms und/oder der Spannung an den Klemmen des oder der leitenden Elemente (10A, 10B, 10C).

2. Elektrische Maschine nach Anspruch 1, **dadurch gekennzeichnet, dass** die Einheit oder die Einheiten von zwei benachbarten Spulen (8) gleicher Phase (A,B,C), die von dem oder den leitenden Elementen (10A, 10B, 10C) umgeben sind, so gewählt werden, dass das oder die leitenden Elemente (10A, 10B, 10C) in Abwesenheit einer Betriebsstörung in der elektrischen Maschine (1) von einem Strom der Stärke Null oder im Wesentlichen Null durchflossen werden.

3. Elektrische Maschine (1) nach Anspruch 1 oder 2, **dadurch gekennzeichnet, dass** sie drei Phasen (A,B,C) aufweist.

4. Elektrische Maschine (1) nach Anspruch 3, **dadurch gekennzeichnet, dass** sie zwölf Spulen (8) oder ein Vielfaches von zwölf Spulen (8) enthält.

5. Elektrische Maschine (1) nach Anspruch 3 oder 4, **dadurch gekennzeichnet, dass** sie drei leitende Elemente (10A, 10B, 10C) enthält, wobei jedes leitende Element (10A, 10B, 10C) alle Einheiten von benachbarten Spulen (8) gleicher Phase (A,B,C) umgibt.

6. Elektrische Maschine (1) nach Anspruch 4, **dadurch gekennzeichnet, dass** sie ein leitendes Element enthält, das eine Einheit von sechs benachbarten Spulen (8) mit drei unterschiedlichen Phasen (A,B,C) umgibt.

7. Kraftfahrzeug, **dadurch gekennzeichnet, dass** es eine elektrische Maschine (1) nach einem der Ansprüche 1 bis 6 enthält.

8. Verfahren zur Erfassung einer Betriebsstörung in einem Stator (2) oder einem Rotor (11) einer drehenden elektrischen Maschine (1) mit mehreren Phasen (A,B,C) nach Anspruch 1, **dadurch gekennzeichnet, dass** es enthält:
- einen Schritt der Messung der Stärke des in dem oder den leitenden Elementen (10A, 10B, 10C) fließenden elektrischen Stroms und/oder der Spannung an den Klemmen des oder der leitenden Elemente (10A, 10B, 10C), und
- einen Schritt des Vergleichs des oder der gemessenen Werte mit einem oder mehreren Bezugswerten.

9. Verfahren nach Anspruch 8, **dadurch gekennzeichnet, dass** die elektrische Maschine (1) mindestens ein leitendes Element (10A, 10B, 10C) pro Phase (A,B,C) enthält, und dass das Verfahren außerdem einen Schritt des Vergleichs der Amplituden der für die verschiedenen Phasen (A,B,C) gemessene Werte enthält.

10. Verfahren nach Anspruch 8 oder 9, **dadurch gekennzeichnet, dass** die elektrische Maschine (1) mindestens ein leitendes Element (10A, 10B, 10C) pro Phase enthält, und dass das Verfahren außerdem einen Schritt des Vergleichs der Vorzeichen der für die verschiedenen Phasen (A,B,C) gemessenen Werte enthält.
